# FASCICULE DE BREVET EUROPEEN

(11) **EP 1 096 811 B1**
(45) Date de publication et mention de la délivrance du brevet: **01.10.2003**
(21) Numéro de dépôt: 00402730.6
(22) Date de dépôt: 04.10.2000
(51) Int. Cl.: H04Q 7/20, H04Q 7/34, H04Q 7/32

(54) **Téléphone mobile bibande et son procédé d'utilisation**
Zweiband-Telefon und Betriebsverfahren
Dual mode telephone and its method of operation

(30) Priorité: 29.10.1999 FR 9913771
(43) Date de publication de la demande: 02.05.2001
(73) Titulaire: SAGEM S.A., 75015 Paris (FR)
(72) Inventeur: Ismert, Laurent M., 92400 Courbevoie (FR); Combes, Bernard, 75011 Paris (FR)
(74) Mandataire: Schmit, Christian Norbert Marie

(56) Documents cités:
- EP-A- 0 813 312
- WO-A-98/58511
- US-A- 5 451 839

## Description

La présente invention a pour objet un téléphone mobile bibande perfectionné ainsi que son procédé d'utilisation. Le but de l'invention est de proposer un tel appareil utilisable avec des réseaux de tous les types.

Dans le domaine de la téléphonie mobile on connaît des réseaux dits cellulaires par lesquels des stations de base gouvernent des cellules géographiques et permettent par leur intermédiaire une mise en relation de téléphones mobiles qui se trouve dans ces cellules avec d'autres terminaux, fixes ou mobiles. Les échanges entre les téléphones mobiles et les stations de base sont organisés selon différents protocoles correspondant à différentes normes. On connaît ainsi notamment la norme GSM 900 MHz dans laquelle des signaux échangés par un téléphone mobile en direction d'une station de base occupent une bande de fréquence située entre 880 et 915 MHz alors que les signaux en retour, de la station de base au téléphone mobile, sont situés dans la bande de 925 à 960 MHz. On connaît par ailleurs la norme DCS 1800 MHz dans laquelle les bandes des fréquences précédentes sont respectivement 1710 à 1785 MHz et 1805 à 1880 MHz. D'autres normes gouvernant d'autres bandes, notamment les normes PCS (dans la gamme des 1900 MHz) et la norme UMTS (dans la gamme des 2100 MHz), sont également envisageables. Globalement les bandes de fréquences des différentes normes se situent d'une part autour de 900 MHz (normes ARDIS, AMPS et CDPD notamment décrites dans le document WO 98/58511, ISM, IS-54, IS-95 etc.) alors que d'autres normes utilisent la bande autour de 1800 MHz et plus (DCS, PCS, DECT, PACS, PHS, etc.). Les constructeurs de téléphones mobiles ont donc conçu des appareils capables d'émettre et de recevoir autour de la bande des 900 MHz, autour de la bande des 1800 MHz, ou autour de la bande des 900 MHz et autour de la bande des 1800 MHz. Ces derniers appareils sont dits bibandes.

Parallèlement à ce développement, il a été développé des outils de test de la qualité des réseaux de téléphonie mobile. Ces outils de test permettent aux opérateurs qui mettent en place des stations de base dans une cellule d'explorer les différents lieux de la cellule et de mesurer la qualité de réception et de transmission des signaux à partir de ces différents endroits. Ces appareils de test sont en pratique des téléphones mobiles munis en outre d'un logiciel de test qui mesure aux endroits choisis les qualités du réseau de téléphonie mobile. Ces qualités mesurées représentent par exemple le niveau de signal reçu en provenance de la station de base dans chacune des gammes d'une bande de fréquence, ainsi que, pour une gamme de fréquence de balise de ces stations de base, les éventuelles interférences particulièrement destructrices en ces lieux (ce qui aurait pour but d'identifier les gammes de fréquences à écarter dans cette cellule) ainsi que, d'une manière générale toutes les qualités de transmission et de traitement effectué dans la station de base (filtrage de gammes de fréquence, codage de canal, codage de parole etc.).

Bien entendu pour tester un réseau de téléphonie mobile émettant dans une bande à 900 MHz il faut un téléphone mobile adapté. De même il faut un autre téléphone mobile adapté pour mesurer, au même endroit dans une même cellule, l'activité d'une station de base qui émettrait dans une autre bande, par exemple en DCS 1800 MHz.

En outre certains opérateurs pour augmenter leur aptitude à connecter de nombreux abonnés disposent dans des cellules des stations de base elles-mêmes bibandes. Ces stations de base bibandes sont capables d'une part de trafiquer dans une bande et dans l'autre, et d'autre part capable d'organiser le trafic de façon à éviter la saturation dans une bande ou dans l'autre. Ces stations de base bibandes peuvent ainsi trafiquer avec un téléphone mobile dans une bande, en même temps qu'elles trafiquent avec un autre dans une autre bande. Eventuellement, pour un même téléphone mobile l'émission et la réception peuvent se situer dans deux bandes différentes. Dans ce but ces stations de base bibande reçoivent des téléphones mobiles qui pénètrent dans leur cellule des indications selon lesquelles ces téléphones mobiles sont ou ne sont pas eux-mêmes bibandes. En fonction de sa charge de travail, la station de base peut alors trafiquer avec ces téléphones mobiles bibandes dans une bande et ou dans l'autre de manière à éviter la saturation du trafic. Ces stations de base bibandes doivent aussi être contrôlées avec des téléphones bibandes.

Ceci conduit les agents des opérateurs qui se rendent sur place pour mesurer les qualités d'un réseau à disposer de trois téléphones mobiles, un pour une première bande, un pour une deuxième bande et un pour un fonctionnement bibande. L'utilisation de trois types d'appareil de mesure est une contrainte onéreuse et particulièrement complexe à mettre en oeuvre, compte tenu que les agents doivent effectuer en de multiples endroits de nombreuses mesures. A cet effet, dans les endroits en question ils connectent le téléphone mobile de test à un micro-ordinateur portable et enregistrent dans la mémoire de ce micro-ordinateur portable les résultats des tests de mesure. Le test des trois réseaux implique alors de devoir changer l'appareil connecté au micro-ordinateur portable et implique également des manipulations correspondantes dans les fichiers de ce micro-ordinateur portable.

A priori il n'y a pas véritablement de solution à ce problème compte tenu que le réseau échange avec un téléphone mobile en fonction du type de ce téléphone mobile et que par conséquent les tests doivent être menés en raison du protocole institué entre la station de base et le téléphone mobile, protocole qui lui-même dépend du type du téléphone mobile.

Dans l'invention néanmoins, on a résolu ce problème en munissant un téléphone mobile bibande de trois modes de fonctionnement. Ces modes de fonctionnement peuvent être choisis par un opérateur, par exemple en appuyant sur des touches du clavier du téléphone mobile, ou, par l'intermédiaire de la connexion du téléphone mobile à l'ordinateur portable, par l'intermédiaire du clavier de cet ordinateur portable. Le principe de l'invention est alors le suivant.

Le téléphone mobile est mis en service et déclare au réseau son type, qui est représenté par des paramètres enregistrés dans la mémoire du téléphone mobile. Une fois que cette déclaration est faite, ou au moins une fois que le téléphone mobile est mis sous tension, on change les paramètres, puis on provoque une mise hors service puis une nouvelle mise en service du téléphone mobile avec les nouveaux paramètres. Ces nouveaux paramètres instituent alors avec la station de base un mode de fonctionnement correspondant exclusivement à l'un des modes suivants, première bande, deuxième bande, ou bibande. La station de base reconnaît alors le téléphone mobile (qui est bibande) respectivement comme un téléphone monobande dans la première bande, comme un téléphone monobande dans la deuxième bande, ou comme un téléphone bibande.

Elle échange alors avec ce téléphone mobile des signaux de mise en connexion et des signaux de trafic correspondant à cette reconnaissance. Ces signaux sont mesurés par les programmes de test du téléphone mobile. Ces signaux sont automatiquement stockés dans la mémoire de l'ordinateur portable.

A l'issue de ces tests, sans avoir besoin d'arrêter (de mettre hors tension) le téléphone mobile, la déconnexion du téléphone mobile est provoquée. Dans ce cas, le téléphone mobile n'écoute plus le réseau et le réseau ne le reconnaît plus. Les paramètres sont alors changés (avant ou après la déconnexion), et une nouvelle mise en service est entreprise qui comprend alors seulement une reconnexion du téléphone mobile au réseau de téléphonie mobile. Celui-ci entame alors avec ce téléphone mobile une nouvelle procédure de reconnaissance. De cette façon, le même appareil a déclaré au réseau un autre mode de fonctionnement (selon une autre bande ou selon un mode bibande) et une nouvelle campagne de mesures peut être entreprise. Dans ce cas les résultats des mesures sont également stockés dans la mémoire de l'ordinateur portable puisque le téléphone mobile n'en a pas été déconnecté. On aboutit alors au résultat recherché que la campagne de mesure des trois réseaux est menée avec un seul appareil sans intervention manuelle, sans déconnexion physique du téléphone mobile du micro-ordinateur portable.

Plus généralement, hors contexte de test une telle procédure permet à un téléphone mobile de fonctionner dans une bande, dans une autre ou d'une manière bibande, à sa demande. Ce choix, rendu possible à l'utilisateur peut par exemple être exploité pour lui faire choisir un opérateur de téléphonie mobile.

L'invention a donc pour objet un téléphone mobile de type bibande, comportant des circuits, munis d'un système d'exploitation, pour fonctionner en connexion dans un réseau de téléphonie mobile sur deux bandes de fréquence, caractérisé en ce qu'il comporte un circuit de forçage d'un mode de fonctionnement d'une station de base bibande de ce réseau qui est en connexion avec ce téléphone mobile, pour fonctionner avec cette station de base sur une seule de ces bandes.

L'invention a également pour objet un procédé de mise en service d'un téléphone mobile multibande avec un réseau de téléphonie mobile dans lequel, on charge un système d'exploitation dans une mémoire de travail du téléphone mobile, on met une première fois le téléphone mobile en service, et le téléphone mobile déclare au réseau son type, caractérisé en ce que, alors que le téléphone mobile est en service au cours de cette première mise en service, on paramètre le fonctionnement du téléphone mobile avec des deuxièmes paramètres, on met le téléphone mobile hors service, puis on met le téléphone mobile une deuxième fois en service avec les deuxièmes paramètres.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : la représentation schématique d'un téléphone mobile bibande utilisable selon l'invention ;
- Figures 2a et 2b : les diagrammes respectivement spectraux et temporels des signaux échangés entre le téléphone mobile et une station de base.

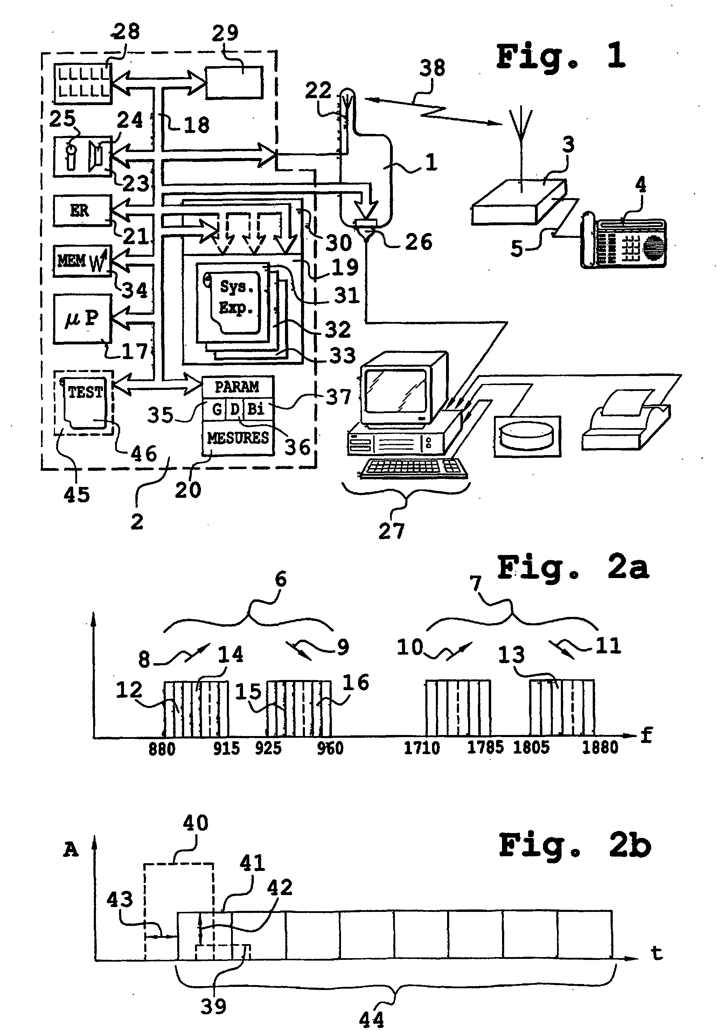

La figure 1 montre un téléphone mobile 1 comportant des circuits 2 pour fonctionner selon l'invention en connexion avec un réseau de téléphonie mobile. Le réseau de téléphonie mobile est ici schématiquement représenté par une station de base 3 mise en relation avec des téléphones 4 fixes ou mobiles par une infrastructure 5 de type connu, pouvant notamment comporter un réseau téléphonique commuté. Le téléphone mobile 1, conformément à la figure 2a peut fonctionner en connexion avec la station de base 3 sur deux bandes. Par exemple, une première bande 6 est une bande de type GSM 900 MHz alors qu'une deuxième bande 7 est une bande de type DCS 1800 MHz. D'une manière connue chacune de ces bandes est divisée en des sous-bandes montantes et descendantes respectivement 8, 9 et 10, 11. Dans chacune de ces bandes, des gammes de fréquence telles que 12 ou 13 sont temporairement réservées, en mode TDMA - Time Division Multiple Access, accès multiple à répartition dans le temps, à une liaison spécifique entre un téléphone mobile 1 et une station de base 3. Ces gammes de fréquence, dans les normes indiquées ci-dessus ont une largeur de 200 KHz et au cours d'une communication chaque téléphone mobile est amené à sauter d'une gamme 12 à une gamme 14 selon une loi pseudo-aléatoire. En réception, dans la sous-bande 9 la station de base 3 doit également sauter entre des gammes 15 et des gammes 16 pseudo-aléatoirement.

Les circuits 2 de connexion du téléphone mobile 1 au réseau comportent essentiellement un microprocesseur 17 en relation, par l'intermédiaire d'un bus 18, avec une mémoire programme 19, une mémoire de données 20 et des circuits d'émission-réception proprement dits 21. Les circuits d'émission-réception 21 sont notamment capables de faire diffuser par une antenne 22, ou de recevoir par cette antenne 22, des signaux dans les gammes de fréquence 12 à 16 évoquées. Le téléphone mobile 1 comporte, également reliés au bus 18, des périphériques 23 de paroles munis ici symboliquement d'un haut-parleur 24 et d'un microphone 25 et un périphérique de connexion 26 permettant au téléphone mobile d'être relié à un micro-ordinateur portable 27. Le téléphone mobile 1 comprend enfin un clavier 28 et un écran 29, tous deux reliés au bus 18, et permettant à un utilisateur de se servir de ce téléphone mobile.

Selon une caractéristique importante de l'invention, le téléphone 1 comporte un circuit 30 de forçage d'un mode de fonctionnement en connexion. Ce circuit de forçage 30 prend ici par exemple la forme d'un circuit de sélection d'un système d'exploitation parmi trois systèmes d'exploitation 31, 32, 33 mémorisés dans la mémoire 19. Selon l'état de sélection du circuit 30, au moment de la mise en service du téléphone mobile, ou au moins de la mise en connexion, un de ces systèmes d'exploitation est chargé dans une mémoire de travail 34 avec laquelle travaille le microprocesseur 17.

La représentation montrée ci-dessus avec trois systèmes d'exploitation est une représentation générique. Dans la pratique un seul système d'exploitation peut être utilisé mais dans ce cas des paramètres différents, stockés dans la mémoire de données 20, peuvent être prélevés pour paramétrer un système d'exploitation unique contenu dans la mémoire 19. Ces paramètres respectivement stockés dans des zones 35 à 37 de la mémoire 20, représentent ici schématiquement G, un fonctionnement selon la norme GSM 900 MHz, D un fonctionnement selon la norme DCS 1800 MHz, et Bi un fonctionnement en mode bibande. On verra par la suite comment le fonctionnement imposé par le système d'exploitation ainsi paramétré retentit dans une communication 38 entre la station de base 3 et le téléphone mobile 1.

Le fonctionnement du procédé de l'invention est le suivant. Dans un premier temps on met le téléphone mobile 1 en service, par exemple par connexion des circuits 2 à une batterie (non représentée). En fonction de son système d'exploitation, et ou d'un état pré-programmé du circuit 30, le téléphone mobile déroule des étapes de sa mise en service. Cette mise en service comporte deux types d'opérations. Un premier type d'opération est propre au téléphone mobile et on l'appellera ici démarrage (ou mise sous tension) pour la mise en service, et arrêt (ou mise hors tension) dans le cas contraire. La mise en service comporte également comme autre opération une connexion au réseau, à l'opposé, une déconnexion du téléphone mobile de la station de base 3.

Au cours d'une première mise en service, avec les touches du clavier 28, ou éventuellement avec le micro-ordinateur 27 on sélectionne un paramétrage, G, D, ou Bi, du téléphone mobile. Puis on provoque une nouvelle mise en service. Au besoin cette nouvelle mise en service comporte un arrêt et un redémarrage du téléphone mobile lui-même. Dans la pratique, on verra qu'il suffit de se déconnecter simplement et de changer des paramètres de la mise en connexion du téléphone 1 avec la station de base 3.

Ce faisant, à la reconnexion au réseau, les paramètres induisent un fonctionnement spécifique à chacun de ses modes, monobande 900 MHz, monobande 1800 MHz, ou bibande. En effet, l'établissement de la communication 38 commence normalement, selon les normes, par un protocole de début. Au cours de ce protocole de début le téléphone mobile signale à la station de base son existence dans le réseau. Il lui déclare à cet effet notamment sa classe, essentiellement le type de mode ci-dessus dans lequel il est censé fonctionner. En outre le téléphone mobile 1 informe la station de base 3 de son aptitude à émettre plus ou moins fortement. En effet la norme GSM prévoit que la puissance maximale d'émission par un téléphone mobile est de un watt, alors qu'en DCS elle est de deux watts. Mais la puissance d'émission peut être plus élevée si le téléphone mobile est un téléphone de voiture. C'est justement ce type d'information que le téléphone mobile 1 transmet à la station de base 3. A l'issue de ce protocole de reconnaissance de début la station de base adapte son fonctionnement au mode que lui a indiqué le téléphone mobile dans la déclaration préalable.

Du fait que la station de base a adapté son fonctionnement, on peut considérer qu'avec le circuit 30 on a bien réussi à forcer un mode de fonctionnement en connexion particulier, parmi les trois possibles. Les circuits du téléphone mobile 1 comportent donc essentiellement à cet effet des circuits de déclaration pour transmettre des paramètres correspondant à un mode. Dans l'invention la particularité de ces circuits de déclaration se situe dans le fait que les paramètres déclarés sont eux-mêmes programmables, prélevés en zones 35 à 37 de la mémoire 20 en fonction de l'état du circuit 30. A titre complémentaire bien entendu le système d'exploitation est adapté au mode que le téléphone mobile a déclaré à la station de base.

La figure 2b montre dans un diagramme temporel, dans une utilisation de type TDMA, l'allure de l'amplitude du signal provenant du téléphone mobile 1 tel qu'il est reçu par la station de base 3. Selon un éloignement du téléphone mobile 1, plus ou moins fort, de la station de base 3 par rapport à un éloignement moyen, le signal reçu par celle-ci sera un signal 39 plus faible et en retard ou respectivement un signal 40 plus fort et en avance qu'un signal 41 correspondant à une distance moyenne. Ce faisant la station de base 3 imposera au téléphone mobile de fonctionner d'une certaine façon. Notamment elle lui imposera une puissance 42 d'émission et une avance 43 d'émission par rapport à une synchronisation d'une émission moyenne. Par ailleurs la station de base communique des numéros de trame 44 (TSn°) au téléphone mobile 1.

Il est ainsi possible à un téléphone mobile 1 de déclarer à une station de base un mode particulier de fonctionnement par le paramétrage de sa déclaration.

Dans l'invention, dans une utilisation de test, on se sert de cette particularité du téléphone mobile pour tester toutes les possibilités du réseau. Dans ce but le téléphone mobile 1 comporte en plus une mémoire 45 pour mémoriser un programme de test 46. Cependant ce programme de test 46 pourrait être incorporé au système d'exploitation de la mémoire 19 si le téléphone mobile 1 n'était destiné qu'à faire du test ou être contenu dans le micro-ordinateur 27. Pour accomplir ces trois tests, le micro-ordinateur 27 provoquera selon l'invention une mise en service, le changement des paramètres, la mise hors connexion, la reconnexion du téléphone au réseau, et la mesure selon les étapes du programme 46 des différentes caractéristiques du réseau puis la réitération de ces opérations pour les deux (ou plus) autres modes.

Chacun de ces trois tests est de type-connu, et la succession de leurs mesures dans le programme 46 ne présente vis-à-vis de l'invention pas de particularités. Pour mener à bien la succession de ces trois tests après mise hors service (avec déconnexion mais sans arrêt du téléphone mobile 1) une horloge de séquencement du téléphone 1 gouvernée par le programme 46 peut provoquer le changement des paramètres et la remise en service. Ainsi sont testés successivement le fonctionnement du réseau selon une première bande, selon une deuxième bande et selon le mode bibande.

Dans la pratique le programme de test lui-même pourra être affecté par le choix de la paramétrisation retenu, et donc du mode de connexion du téléphone 1 avec la station de base 3. Par exemple en mode bibande, une station de base 3 envoie aux téléphones mobiles des signaux de type SI2TER ou SI5TER. Ces signaux sont utiles pour les téléphones mobiles bibandes, respectivement quand ils sont en veille et quand ils sont en communication. Dans l'invention le programme de test 46, quand il sera utilisé pour tester un mode selon une bande ou selon une autre bande (mais pas selon le mode bibande), ignorera les signaux SI2TER et SI5TER. En effet la station de base 3 émet de tels signaux à destination d'autres téléphones mobiles bibandes qui sont en communication dans ses parages.

En outre dans un mode monobande, seule la bande 6, ou seule la bande 7 doit être mesurée. La mesure consiste pour l'essentiel à regarder pour chaque gamme de fréquence 12 à 16 quelles sont les caractéristiques de transmission. Dans un fonctionnement monobande, la largueur de chacune des bandes 6 et 7 est plus faible que la largeur de la somme de ces bandes 6 et 7. Par conséquent la durée de mesure des phénomènes produits dans ces bandes sera plus courte. De même les synchronisations correspondant à la figure 2b peuvent être différentes d'un mode à l'autre. Le programme 46 est adapté en conséquence.

Par ailleurs les circuits de déclaration qui ont pour objet d'envoyer le contenu des zones 35 ou 36 ou 37 de paramètres à la station de base 3, en même temps le système d'exploitation et, le cas échéant, le programme de test 46 sont changés, effectueront l'envoi de signaux de type dits CLASS MARK 2 ou CLASS MARK 3 qui représentent respectivement le type du téléphone mobile 1 (GSM, DCS ou bibande), et la classe de puissance du mobile (son aptitude à émettre plus ou moins fort). En particulier si le téléphone mobile est situé dans une voiture la puissance d'émission peut être supérieure à la norme citée ci-dessus.

De même, le cas échéant en mode bibande, le téléphone mobile enverra dans sa déclaration une information dite EARLY CLASS MARK CHANGE qui comporte des informations complémentaires sur le téléphone mobile, notamment sur ses priorités de fonctionnement. En définitive rien dans le fonctionnement du téléphone mobile n'est fondamentalement changé au-delà de la déclaration faite au réseau, des adaptations de systèmes d'exploitation, et ou de programmes de test. En mode monobande, pour les tests ou pour l'utilisation, le téléphone mobile qui est bibande se contente d'exploiter les signaux émis par la station de base et qui concernent uniquement les téléphones monobandes. Dans ce mode, le téléphone mobile 1 par le programme 46 vérifie que le fonctionnement de la station de base 3 est cohérent. Il vérifie par exemple que la station de base 3 ne lui assigne pas un changement de bande (ce qu'il ne devrait pas savoir exécuter puisqu'il s'est déclaré monobande). D'autres vérifications de cohérence connues de ce type sont entreprises par les programmes 46.

## Revendications

1. Téléphone mobile (1) de type bibande (6, 7), comportant des circuits (2) munis d'un système d'exploitation pour fonctionner en connexion (38) dans un réseau (3) de téléphonie mobile sur deux bandes de fréquence, **caractérisé en ce qu'**il comporte un circuit (30) de forçage d'un mode de fonctionnement d'une station de base bibande de ce réseau qui est en connexion avec ce téléphone mobile, pour fonctionner avec cette station de base sur une seule de ces bandes.

2. Téléphone selon la revendication 1, **caractérisé en ce qu'**il comporte des circuits (45) de test du réseau de téléphonie mobile.

3. Téléphone selon l'une des revendications 1 à 2, **caractérisé en ce que** les circuits pour fonctionner en connexion comportent un circuit (46) pour ignorer des messages provenant du réseau et propres à un mode bibande de fonctionnement en connexion (SliTER).

4. Téléphone selon l'une des revendications 1 à 3, **caractérisé en ce que** les circuits pour fonctionner en connexion comportent un circuit pour adapter un circuit de synchronisation.

5. Téléphone selon l'une des revendications 1 à 4, **caractérisé en ce que** les circuits pour fonctionner en connexion comportent un circuit de limitation de plages de mesure.

6. Téléphone selon l'une des revendications 1 à 5, **caractérisé en ce que** les circuits pour fonctionner en connexion comportent un circuit (35 - 37) programmable de déclaration de mode de fonctionnement.

7. Téléphone selon l'une des revendications 1 à 6, **caractérisé en ce que** les circuits pour fonctionner en connexion comportent des circuits (46) de cohérence.

8. Procédé de mise en service d'un téléphone mobile multibande avec un réseau de téléphonie mobile dans lequel
- on charge un système d'exploitation dans une mémoire de travail du téléphone mobile,
- on met une première fois le téléphone mobile en service, et
- le téléphone mobile déclare au réseau son type,
**caractérisé en ce que**
- alors que le téléphone mobile est en service au cours de cette première mise en service, on paramètre (30) le fonctionnement du téléphone mobile avec des deuxièmes (35 - 37) paramètres,
- on met le téléphone mobile hors service, puis
- on met le téléphone mobile une deuxième fois en service avec les deuxièmes paramètres.

9. Procédé selon la revendication 8, **caractérisé en ce que**
- après la deuxième mise en service, on relève (46) avec le téléphone mobile des caractéristiques de transmission du réseau.

10. Procédé selon la revendication 9, **caractérisé en ce que**
- au cours de la deuxième mise en service on lance un programme (46) automatique de test qui comporte à l'issue un changement automatique des paramètres de fonctionnement du téléphone mobile en des troisièmes paramètres suivi d'une mise hors service,
- au cours d'une mise hors service, on maintient en fonctionnement une horloge de séquencement, et
- on provoque une troisième mise en service avec cette horloge.

11. Procédé selon l'une des revendications 9 à 10, **caractérisé en ce que**
- une première mise en service du téléphone mobile comporte un démarrage du téléphone mobile suivi d'une mise en connexion du téléphone mobile avec le réseau de téléphonie mobile,
- la mise hors service du téléphone mobile comporte une déconnexion du téléphone mobile du réseau de téléphonie mobile sans arrêt du téléphone mobile.

12. Procédé selon l'une des revendications 9 à 11, **caractérisé en ce que**
- la deuxième mise en service comporte une déclaration au réseau des deuxièmes paramètres.

## Patentansprüche

1. Mobiltelefon (1) vom Zweiband- Typ (6, 7) mit Schaltkreisen (2), die mit einem Betriebssystem ausgestattet sind, um in Verbindung (38) in einem Netz (3) von Mobiltelefonen auf zwei Frequenzbändern zu arbeiten,
**gekennzeichnet durch**
einen Schaltkreis (30) zum Umschalten einer Zweiband- Netz-Basisstation in einen Betriebsmodus, die mit dem Mobiltelefon in Verbindung steht, so dass mit dieser Basisstation auf einem einzigen der Bänder gearbeitet wird.

2. Telefon nach Anspruch 1,
**gekennzeichnet durch**
Schaltkreise (45) zum Prüfen des Mobiltelefonnetzes.

3. Telefon nach Anspruch 1 oder 2,
**dadurch gekennzeichnet, dass**
die Schaltkreise zum Verbinden einen Schaltkreis (46) umfassen, um Nachrichten, die aus dem Netz kommen und zu einem Zweiband- Verbindungsbetrieb (SLiTER) gehören, zu ignorieren.

4. Telefon nach einem der Ansprüche 1 bis 3,
**dadurch gekennzeichnet, dass**
die Schaltkreise zum Verbinden einen Schaltkreis zum Anpassen eines Synchronisationsschaltkreises umfassen.

5. Telefon nach einem der Ansprüche 1 bis 4,
**dadurch gekennzeichnet, dass**
die Schaltkreise zum Verbinden einen Schaltkreis zum Beschränken des Messbereichs umfassen.

6. Telefon nach einem der Ansprüche 1 bis 5,
**dadurch gekennzeichnet, dass**
die Schaltkreise zum Verbinden einen Schaltkreis (35 - 37) umfassen, der auf die Angabe des Betriebsmodus programmierbar ist.

7. Telefon nach einem der Ansprüche 1 bis 6,
**dadurch gekennzeichnet, dass**
die Schaltkreise zum Verbinden Kohärenz- Schaltkreise (46) umfassen.

8. Verfahren zum Betreiben eines mehrbandigen Mobiltelefons in einem Mobiltelefonnetz, bei dem
ein Betriebssystem in einen Arbeitsspeicher des Mobiltelefons geladen wird,
das Mobiltelefon ein erstes Mal in Betrieb genommen wird und dem Netz der Typ des Mobiltelefons mitgeteilt wird,
**dadurch gekennzeichnet, dass**
im Verlauf dieser ersten Inbetriebnahme des Mobiltelefons die Funktion des Mobiltelefons mit zweiten Parametern (35 - 37) parametrisiert (30) wird.

9. Verfahren nach Anspruch 8,
**dadurch gekennzeichnet, dass**
nach der zweiten Inbetriebnahme mit dem Mobiltelefon Übertragungseigenschaften des Netzes geladen (46) werden.

10. Verfahren nach Anspruch 9,
**dadurch gekennzeichnet, dass**
bei der zweiten Inbetriebnahme ein Programm (46) für das automatische Prüfen aufgerufen wird, das am Ende eine automatische Änderung von Betriebsparametern des Mobiltelefons in dritte Parameter und eine folgende Außerbetriebnahme umfasst,
Bei der Außerbetriebnahme ein Sequenzierungstakt in Betrieb gehalten wird,
eine dritte Inbetriebnahme mit diesem Takt durchgeführt wird.

11. Verfahren nach Anspruch 9 oder 10,
**dadurch gekennzeichnet, dass**
eine erste Inbetriebnahme ein Einschalten des Mobiltelefons und eine anschließende Verbindung des Mobiltelefons mit dem Mobiltelefonnetz umfasst,
die Außerbetriebnahme des Mobiltelefons eine Unterbrechung der Verbindung des Mobiltelefons mit dem Mobiltelefonnetz ohne Abschalten des Mobiltelefons umfasst.

12. Verfahren nach einem der Ansprüche 9 bis 11,
**dadurch gekennzeichnet, dass**
die zweite Inbetriebnahme eine Angabe der zweiten Parameter gegenüber dem Netz umfasst.

## Claims

1. Mobile telephone (1) of dual-band (6, 7) type, including circuits (2) provided with an operating system to operate in connection (38) with a mobile telephony network (3) over two frequency bands, **characterised by** the fact that it includes a circuit (30) for forcing an operating mode of a dual-band base station of this network which is connected to this mobile telephone, to operate with this base station over one of these bands.

2. Telephone as described in claim 1, **characterised by** the fact that it includes circuits (45) for testing the mobile telephony network.

3. Telephone as described in one of claims 1 to 2, **characterised by** the fact that the circuits for connected operation include a circuit (46) for ignoring messages coming from the network and proper to a dual-band mode of connected operation (SliTER).

4. Telephone as described in one of claims 1 to 3, **characterised by** the fact that the circuits for connected operation include a circuit for applying a synchronisation circuit.

5. Telephone as described in one of claims 1 to 4, **characterised by** the fact that the circuits for connected operation include a circuit for limiting the measurement ranges.

6. Telephone as described in one of claims 1 to 5, **characterised by** the fact that the circuits for connected operation include a programmable circuit (35 - 37) for declaration of operating mode.

7. Telephone as described in one of claims 1 to 6, **characterised by** the fact that the circuits for connected operation include coherence circuits (46).

8. Process for putting a multi-band mobile telephone into use with a mobile telephony network in which
- the mobile telephone is put into use a first time, and
- the mobile telephone declares its type to the network,
**characterised by** the fact that
- while the mobile telephone is in use during this first use the operation of the mobile telephone is configured (30) with second (35 - 37) parameters,
- the mobile telephone is taken out of use, and then
- the mobile telephone is put into use a second time with the second parameters.

9. Process as described in claim 8, **characterised by** the fact that
- after being put into use the second time, transmission characteristics of the network are picked up (46) by the mobile telephone.

10. Process as described in claim 9, **characterised by** the fact that
- an operating system is loaded into a working memory of the mobile telephone,
- during the second use an automatic test program (46) is launched which includes on completion automatic change of the operating parameters of the mobile telephone to third parameters followed by removal from use,
- during a removal from use, the operation of the sequencing clock is maintained, and
- a third entry into use is caused with this clock.

11. Process as described in one of claims 9 to 10, **characterised by** the fact that
- a first entry into use of the mobile telephone includes switching on the mobile telephone followed by connection of the mobile telephone to the mobile telephony network,
- the removal from use of the mobile telephone includes disconnection of the mobile telephone from the mobile telephony network without switching off the mobile telephone.

12. Process as described in one of claims 9 to 11, **characterised by** the fact that
- the second entry into use of the mobile telephone includes a declaration of the second parameters to the network.
